# EUROPEAN PATENT APPLICATION

(11) **EP 1 223 501 A1**
(43) Date of publication of application: **17.07.2002**
(21) Application number: 01300321.5
(22) Date of filing: 16.01.2001
(51) Int. Cl.: G06F 3/023

(54) **Keyboard**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

To allow single keystroke entry of alphanumeric characters on a keyboard having fewer keys than the number of characters required, each alphanumeric key of a keypad 31 is arranged to move relative to the keypad, to expose indicia representing the different characters accessible using the respective key. When the required character is indicated, the key is pressed to select that character. Rocking, rolling and sliding embodiments are disclosed.

## Description

The present invention generally relates to an input device for inputting instructions or data sequentially into an apparatus such as an information processing apparatus, which can include a display unit. An instruction is an input which causes the apparatus to carry out some function, such as to perform a calculation, justify text, make a telephone call, or print a document. A data item is an item (generally a single character such as a letter, numeral, or punctuation mark) which the apparatus is to use in such processing. The device combines the data items to form text, numerical data, etc. The functions of inputting data items and instructions may be combined, for example by displaying the data items as they are input to the device.

In modern information processing apparatus it is necessary to provide a convenient user interface for the input of data items and instructions. Conventionally for computers and many other devices this is provided as a keyboard, operated in the conventional manner by touching or depressing keys each associated with a specified function. In the following, instructions and data items will be collectively referred to as "key functions".

The physical size of a keyboard is dictated by the number of individual keys required, (about 50 on a typewriter, over 100 on a typical computer) and also by the physical size of the individual keys, which is in turn dictated by ergonomic considerations, in particular the size of human fingers. For large desk-mounted arrangements the conventional "QWERTY" typewriter layouts (so-called from the order of the first six keys on the first row), is convenient for data entry by the user's ten fingers, but this layout is less convenient for hand held devices as these require single handed entry. Moreover, in personal digital assistants (PDAs), pagers, mobile phones, and remote control devices, the physical size of the device limits the number of keys that can be accommodated on its surface. It is therefore desirable to arrange that the required functions can be activated using a smaller number of keys - typically twelve for a telephone keypad. This generally requires any given key to have several functions - most functions then requiring a sequence of several keystrokes, instead of a single keystroke, to activate them. The fewer the number of keys, the more difficult it is for a user to learn and operate such systems.

To allow text entry on a telephone keypad, the numerical keys each have several letters of the alphabet associated with them. This feature was originally provided to allow numerical codes to be represented by more easily memorable letter codes, for example the BATtersea telephone exchange in London had the code BAT, dialled using the digits 228 - note that the "2" on the dial can represent A, B or C, so the BAT code precludes the use of the codes CAT (for Catford) or ACT for (Acton) for example. More recently individual mnmemonic numbers have sometimes been used: for example 0800 PLUMBER (0800 7586237) or 0845 TAXICAB (0845 8294222). However, they are still in effect using an alphabet of only eight characters (or nine, if zero is used to represent the letter "O").

For text entry on mobile telephones and the like, it is known to use context-predictive keying, in which the characters to be represented by the present and previous key presses are determined from an assessment of the character string as a whole. However, this can only produce a suggestion as to what the intended character string was - for example "228" could be any one of 27 combinations, including "bat", "cat", "act". If the suggestion is incorrect, a manual means of correcting is required. Moreover, the display of the character string changes as characters are added to it, which users can find disconcerting.

In many existing systems multiple presses of the same key are used to differentiate between letters represented by that key. So, for example, when in text mode, "A" can be entered by a single press of the "2" key, whilst "B" requires a double-click and "C" three clicks of the same key. However, this is difficult to use in practice, in particular because users have to vary their keying speed to differentiate between a character represented by a multiple click and a pair of characters represented by the same key. For example, four clicks of the "2" key could represent any of the following character strings: AAAA, AAB, ABA, AC, BAA, BB, or CA, and careful control of the timing of the key presses is needed to distinguish them. It is also necessary to switch to numeric mode if numerals are to be represented.

According to the invention there is provided a keypad comprising a plurality of keys for input of alphanumeric characters, the keys being arranged in a surface of the keypad, at least some of the keys having a multifunctional capability whereby movement of a key to a first position generates a first character and movement of the same key to at least one other position generates one or more further characters. In one embodiment the keys are arranged for rocking movement about one or more axes parallel with the keypad surface, such movement causing entry of a character. Alternatively, the keys may be arranged for translational movement in a direction parallel to the keypad surface, between two or more positions representative of different characters, or they may be arranged for rotary movement about one or more axes, such that different angular positions represent different characters, also being arranged for translational motion in a direction perpendicular to the keypad surface to select the character represented by the current key position.

Keys of these general types have previously been used for other purposes, such as up/down scrolling, but not for the purpose of generating alphanumeric characters.

In this specification the term "alphanumeric" is to be understood as embracing keys having character sets including such variants as upper and lower case, punctuation etc. The character set may include numerals. However, in one embodiment of the invention, the functioning of the keyboard can be switched between an alphabetic mode and a numeric mode, effectively disabling the multifunction capability such that each key is capable of generation of only one (numeric) character. The character set capable of being generated by the keys when the multifunction capability is disabled may be a subset of the character set capable of being generated when the multifunctional capability is enabled, so that it is possible to enter numerals without having to switch from multifunction mode to single mode.

A device incorporating a keypad according to this invention preferably has output means arranged to co-operate with the keypad to generate an output indicative of the character selected. This output may be in any form detectable by the user, such as visual, audible or tactile.

Embodiments of the present invention will now be described with reference to the accompanying drawings in which:
Figure 1 is a schematic drawing of apparatus incorporating the input device in accordance with a first embodiment of the present invention,
Figure 2 is a schematic drawing of the structure of one of the alphanumeric keys of Figure 1
Figure 3 is a schematic drawing of apparatus incorporating the input device in accordance with a second embodiment of the present invention;
Figure 4 is a schematic drawing of the structure of one of the alphanumeric keys of Figure 3,
Figure 5 is a schematic drawing of the structure of an alphanumeric key of a third embodiment of the invention;
Figure 6 is a schematic drawing of the structure of an alphanumeric key of a fourth embodiment of the invention;

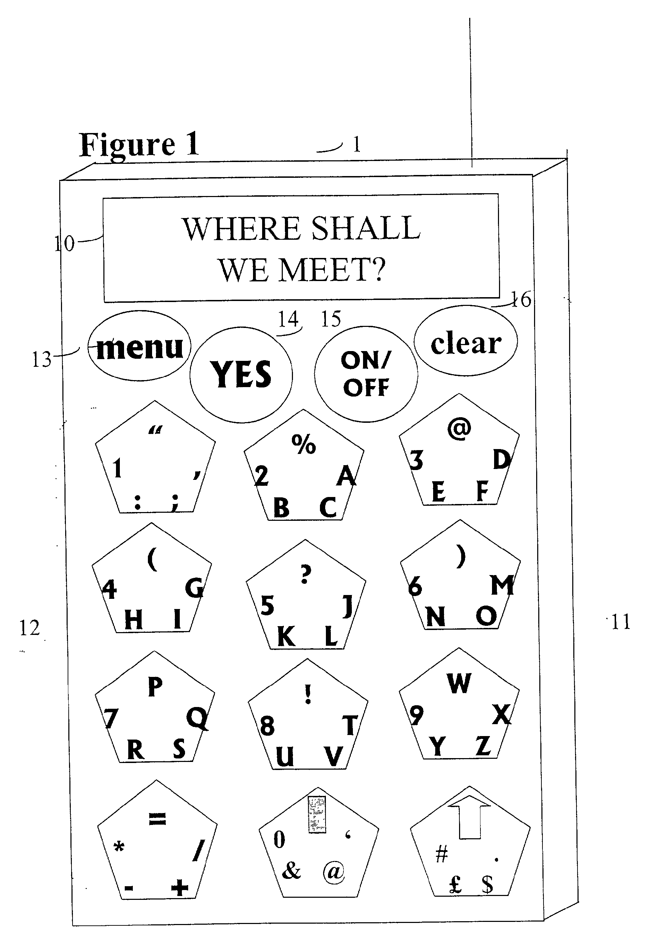

Figure 1 shows a first embodiment of a mobile telephone handset 1 having a display 10 and a keypad 11 according to the invention, the keypad having a set 12 of twelve dialling alphanumeric keys (which will be identified herein by the numerical characters and function displayed thereon, 1,2,3,4,5,6,7,8,9,0,* and #), and four function keys 13, 14, 15, 16. The function keys operate in conventional manner to select functions for the telephone handset to operate: for example repeatedly pressing the "menu" key 13 will cause various functions to be displayed on the display 10, and pressing the "YES" key (14) will select the menu item currently displayed. In telephone mode, if a number is displayed on the display screen 10, pressing "YES" causes the handset to make a call attempt to that number.

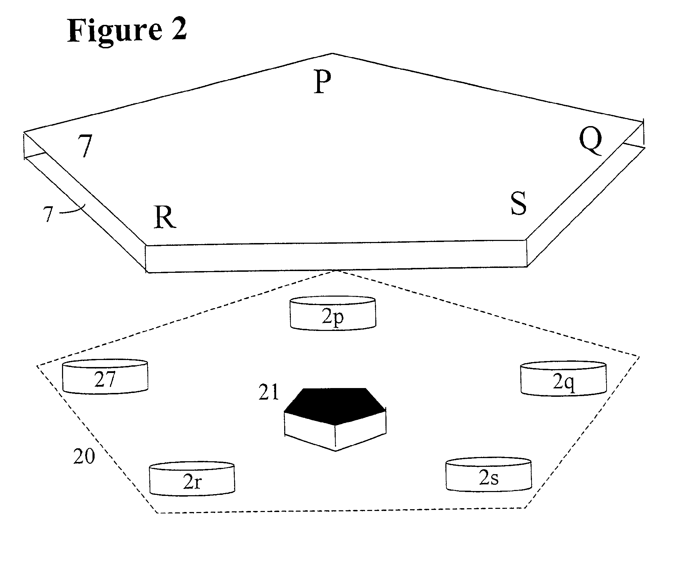

As shown in Figure 2, the alphanumeric key 7 (shown for example, the others are the same) is mounted on a fixed central support 21 such that it can rock, and underlain by a resilient member 20 surrounding the support 21. Under each corner of the key 9 there is a movement or position sensor, 27, 2p, 2q, 2r, 2s, such as a piezoelectric or capacitance element, or a strain gauge, or an optical position sensor. By pressing the key at different positions it can rock about the support 21 such that its movement is sensed by one or other of the sensors 27, 2p, 2q, 2r, 2s, thus causing entry of the respective character. The sensor may be arranged to detect different pressures applied to the key 7, to indicate different desired characters such as upper and lower case, italicisation etc.

Under the control of the function keys 13, 14, 15, 16 the device may be arranged to operate in different modes, in some of which some or all of the keys are arranged to represent only one character each. For example, in telephone mode, each key only represents a numeric character, whichever sensor 27, 2p, 2q, 2r, 2s detects movement. This makes dialling telephone numbers easier than if the keys were in multifunction mode. For example, there may also be an arithmetic mode, in which the "star" key operates in multifunction mode to provide the five basic arithmetical functions and all the other keys operate in single function mode to provide the ten digits and the decimal point (from the # key). In telephone mode the individual numeric keys 12 operate conventionally, entering the numerical digit represented on the respective key when it is pressed. In text mode, the keys are arranged to enter different characters according to the direction in which the key is rocked.

The keys are shown as pentagonal, with each key having five possible characters. Although the invention is not limited to this arrangement, this allows the "7" and "9" keys to each also represent four letters, (PQRS and WXYZ respectively) as is conventional in telephone keypads. A "space" bar is included as one of the functions of the "0" key, and a "shift" function on the "#" key - the latter allowing one or more additional character sets to be selected. (An alternative arrangement, with only four characters per key, could have the "Q" and "Z" entered by the "0" key, and most of the punctuation marks in a separate character set accessed using the "shift" function of the # key).

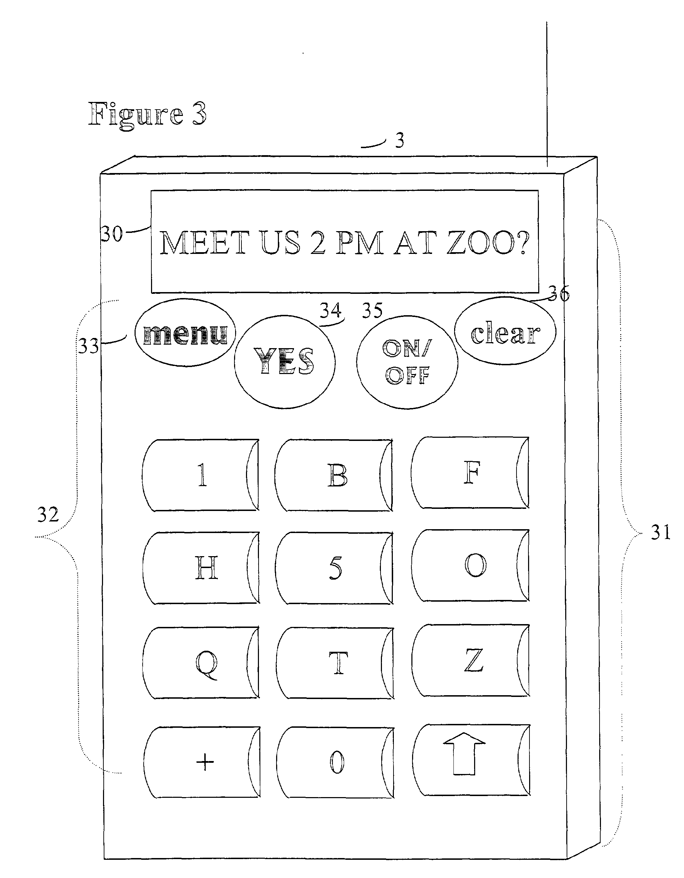

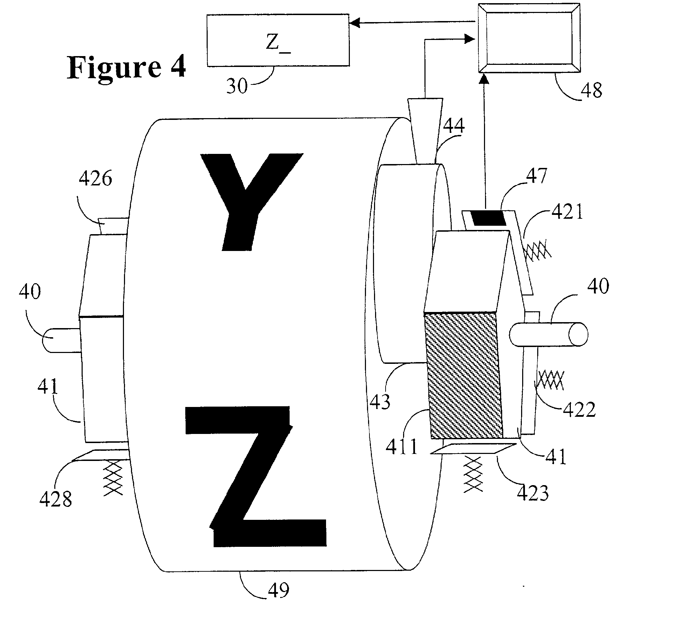

In the embodiment of Figures 3 and 4, the general arrangement of the handset 3 is similar to that of Figure 1, having a display 30, keypad 31, alphanumeric keys 32 and function keys 33, 34, 35, 36. However, the structure of the alphanumeric keys 32 is different. Instead of the rocking arrangement used in Figures 1 and 2, each key is arranged to rotate about an axis parallel with the surface of the keypad 31, to expose indicia representing the different characters accessible using the respective key. When the required character is revealed, the key is pressed to select that character. This arrangement has the advantage that the indicia on the keys representing the characters can be larger than in the first embodiment, but it requires two actions (rotate and press) to select each character. In use, the indicia may be obscured by the user's finger so the character represented by the current position of the key most recently rotated or pressed may be indicated on the display 30. Audio or tactile outputs may also be provided.

A possible configuration for the alphanumeric keys 32 is shown in Figure 4. The visible part of the key 49 is drum shaped and mounted on a spindle 40. The spindle 40 has a bearing 41, 421, 422, 423, 426, 428, and a position sensor 43, 44.

The bearing comprises a first cam portion 41 concentric with the spindle 40 and cam followers 421, 422, 423 (others omitted to reveal the cam 41 itself), arranged such that the drum can be rotated stepwise between distinct angular positions at which characters may be entered. The cam 41 is polygonal, having the same number of sides as there are indicia on the drum. The cam faces bear against cam followers 421, 422, 423, resiliently mounted in the keypad 32 such that the cam portion 41 can be manually rotated against the force of the followers 421, 422, 423. When released, the cam followers 421, 422, 423 force the cam 41, and hence the drum 49, into one of a plurality of neutral positions, each representative of one of the alphanumeric characters indicated on the drum 49, thereby ensuring stepwise movement between distinct positions of the drum 49 at which the individual characters can be entered. The polygonal portion 41 extends through the drum 49 to engage further follwers (426, 428 and others not shown) on the other side of the drum.

The angular position sensor 43, 44 comprises a second cam member 43 and a detector 44. The second cam member 43 interrupts the polygonal cam portion 41 and is mounted eccentricly to the spindle 40. The detector 44 may be for example a cam follower member having piezo-electric properties, or a proximity detector. The angular position sensor 43, 44 transmits a signal to a processor 48 indicating the position of the cam 43, from which the proceesor can derive the character currently indicated by the key's position.

Alternatively, the angular position sensor may be provided by one of the faces 411 of the polygonal cam 41 having a special characteristic, such as being metallised, the cam followers 421, 422, 423 each being provided with sensors for detecting that characteristic.

When the user wishes to select a character, he presses the key 49. This causes translational movement of the drum 49, including the spindle 40 and cams 41, 43. A movement sensor detects this action and transmits a signal to the processor 48 indicating that the character has been selected. The movement sensor may conveniently be provided in the form of piezo-electric elements 47 mounted in two or more of the cam followers 421, 422, 423, (only one shown) arranged such that a signal is transmitted only if the piezo-electric currents detected in the elements are different. This avoids spurious signals being generated when the cam followers flex in unison when the polygonal cam 41 is being rotated into the required position.

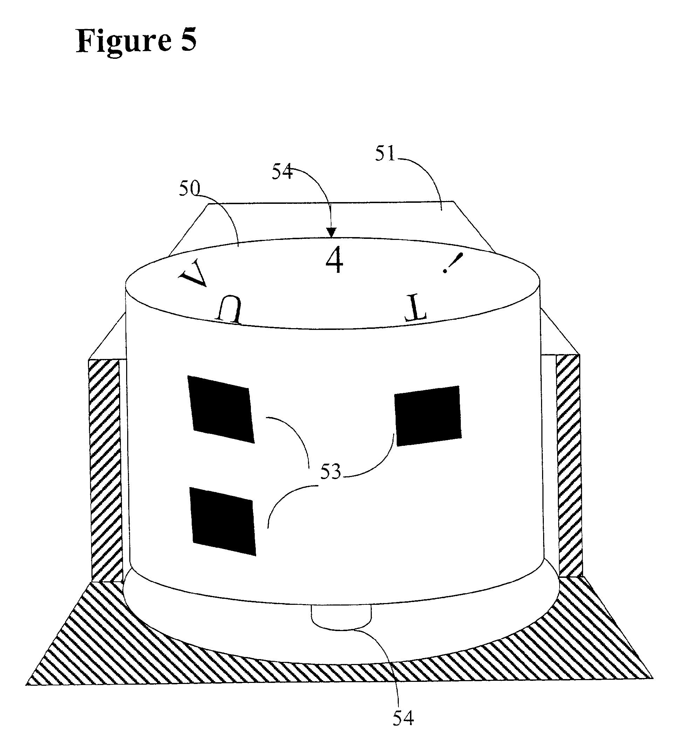

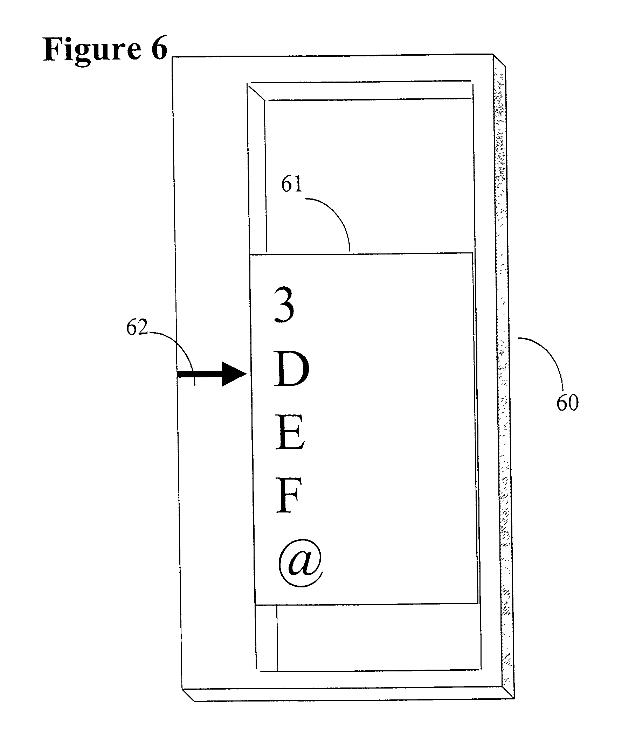

Further possible configurations are shown in Figures 5 and 6. In Figure 5 a drum shaped key 54 is mounted in the keypad 51 (shown partially broken away to reveal the key 50) for rotation about a spindle 52. Position-sensing transducers 53 co-operate with a detector (not shown) in the keypad 51. the upper surface of the key 54 carries indicia which, by rotation of the key 50, can each be arranged to line up with an index 54. When the desired character is aligned with the index 54, the user can depress the key, causing the spindle to move downwards. This motion is detected in any conventional manner and, together with the rotational position as detected by the transducers 53, causes the desired character to be entered.

In the arrangement of Figure 6 the key 60 carries a sliding member 61 on which characters are represented which may be aligned with an index 62. As in the embodiment of Figure 5, a position transducer (not shown) detects the position of the sliding member 61 and the key 60 may be depressed by the user when the desired character has been selected.

## Claims

1. A keypad comprising a plurality of keys for input of alphanumeric characters, the keys being arranged in a surface of the keypad, at least some of the keys having a multifunctional capability whereby movement of a key to a first position generates a first character and movement of the same key to at least one other position generates one or more further characters.

2. A keypad according to claim 1, wherein the keys are arranged for rocking movement about one or more axes parallel with the keypad surface, such movement causing entry of a character.

3. A keypad according to claim 1, wherein the keys are arranged for translational movement in a direction parallel to the keypad surface, between two or more positions representative of different characters.

4. A keypad according to claim 1, wherein the keys are arranged for rotary movement about one or more axes, such that different angular positions represent different characters.

5. A keypad according to claim 3 or 4, the keys also being arranged for translational motion in a direction perpendicular to the keypad surface to select the character represented by the current key position.

6. A keypad according to claim 1, claim 2, claim 3, claim 4 or claim 5, having means for disabling the multifunction capability such that each key is capable of generation of only one character.

7. A keypad according to claim 6 wherein the character set capable of being generated by the keys when the multifunction capability is disabled is a subset of the character set capable of being generated when the multifunctional capability is enabled.

8. A device incorporating a keypad according to any preceding claim, having output means arranged to co-operate with the keypad to generate an output indicative of the character selected.

9. A device according to claim 8, wherein the output means is arranged to generate an audible output.
